# EUROPEAN PATENT APPLICATION

(11) **EP 4 756 839 A1**
(43) Date of publication of application: **10.06.2026**
(21) Application number: 24218193.1
(22) Date of filing: 06.12.2024
(51) Int. Cl.: G21C 15/26, G21C 1/32, G21C 3/54, G21C 15/04

(54) **ANNULAR NUCLEAR FUEL ROD OR CHANNEL WITH CONVECTIVE CIRCULATING LIQUID FUEL FOR FAST NEUTRON REACTORS WITH IN-SITU BREEDING**

(71) Applicant: Petrov, Roman, 1000 Brussels (BE)
(72) Inventor: Petrov, Roman, 1000 Brussels (BE)

(57) **Abstract**

The invention relates to an advanced nuclear fuel channel design for fast-spectrum reactors, featuring an annular O-ring configuration that supports natural circulation of molten fuel. The channel's variable cross-section is optimized to enhance fission in the core zone and neutron capture in the breeding zone. Radial distribution ensures a compact arrangement in the core and wider spacing in the breeding zone for improved neutron management and criticality control. The design integrates optional collectors for circulation support and is compatible with liquid metal or high-temperature gas coolants. This system offers a high-efficiency solution for reactors requiring extended operation and in-situ breeding capabilities.

## Description

The present invention introduces an innovative design for a nuclear fuel channel, particularly suitable for fast-spectrum reactors requiring efficient in-situ breeding and long-term operation. The design features an annular (O-ring) channel configuration that enables molten nuclear fuel circulation through natural convection, optimizing the processes of fission and breeding.

In this system, the molten fuel is heated in the core zone during fission, causing it to ascend due to thermal expansion. The fuel then flows into the breeding zone, where it cools while interacting with a reflector or moderator, promoting neutron capture for breeding. The channel geometry is specifically engineered to enhance performance:
- **Variable Cross-Section:** The cross-section of the channel varies along its length to optimize fuel behavior. A narrower section in the core enhances criticality and heat transfer for fission, while a broader or adjusted cross-section in the breeding zone manages criticality, improves neutron capture, and maximizes breeding efficiency.
- **Radial Distribution:** The channels are radially arranged, with a denser configuration in the core to enhance neutron economy and a more spaced configuration in the outer diameter (reflector zone). This design ensures optimal utilization of neutrons while maintaining criticality control.
- **Reflector/Moderator Integration:** The breeding zone incorporates a reflector or moderator, interacting with the adjusted channel geometry to maximize neutron capture without sustaining fission in the breeding region.
- **Coolant Compatibility:** The channel system is compatible with a range of non-moderating coolants, including liquid metals such as lead or sodium, or high-temperature gases.

The design may include optional upper and lower collectors to support controlled circulation, though they are not required for basic operation. This flexibility in circulation enhances system adaptability while simplifying construction and maintenance.

This innovative fuel channel design offers an advanced solution for long-life reactors, addressing critical challenges such as fuel utilization, neutron management, and reactor compactness, all while reducing the need for frequent interventions.

### Example of the reactor Configuration

The reactor core (2) (See Drawing) consists of radially arranged "O-shaped" channels (1) ( 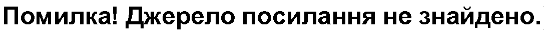 ). Each channel has two distinct zones:
- Inner Core Zone (2): Located within the high neutron flux region, this zone houses the "inner" segment of the O-channels where fission occurs. Molten fuel heats up in this region as it absorbs energy from neutron-induced fission reactions.
- Outer Breeding Zone: The "outer" segment of the O-channels extends into a reflector (3) or breeding zone, where the molten fuel cools while interacting with moderated neutrons. This promotes neutron capture by fertile isotopes like uranium-238, enabling in-situ breeding of fissile material (e.g., plutonium-239).

The liquid metal coolant flows first through the core and partially through the breeding zone (3), where it absorbs heat from the molten salt and reflector, maintaining a moderate temperature. It then enters the core, where it is heated to much higher temperatures by the intense fission reactions. The hot coolant exits the core (2), transfers its heat to the power generation system via heat exchangers (10), and recirculates back to the breeding zone to repeat the process.

In the conceptual drawing, arrows indicating blowdown in and out for both the fuel and coolant are included to schematically represent the need for maintaining the chemical and mechanical balance of the system. For the coolant, oxygen control is critical to ensure the formation and stability of protective oxide layers on surface materials, preventing excessive corrosion and the washing out of these layers. For the fuel system for noble metal trapping is essential as well as mechanisms to control fission product accumulation and maintain chemical stability are equally important, ensuring safe and efficient long-term operation.

The operational temperature range of the reactor is proposed to maximize thermal efficiency while maintaining significant safety margins. With a typical core operating temperature between 600°C and 800°C, the reactor benefits from the high boiling points of its materials. Uranium chloride-based molten fuel has a boiling point of approximately 1,650°C, and lead coolant has an even higher boiling point of 1,749°C, providing substantial temperature reserves that ensure safety during transients and prevent coolant or fuel vaporization.

This high operating temperature range also supports the generation of superheated steam, enabling advanced thermodynamic cycles with greater energy conversion efficiency. The ability to maintain stable operation well below the boiling points of both fuel and coolant ensures robust thermal stability and contributes to the reactor's conceptual safety advantages.

The concept drawing is extremely schematic and represents only the high-level conceptual idea. During the design phase, numerous technical details and engineering considerations must be addressed. For example, the heat generator section cannot consist of straight pipes due to the challenges posed by heat expansion; it must instead incorporate U-shaped or helicoidal configurations to accommodate thermal stresses. Similarly, the control rod mechanism must be reconsidered-since most materials will be buoyant in lead, the traditional gravitational drop mechanism may be unreliable. Instead, control rods may need to be designed to float up rather than drop down to ensure their functionality in this environment. These are just examples of the detailed design considerations that are beyond the scope of this paper at this stage.

The O-ring design ensures continuous circulation of molten fuel within the channels. As fuel heats in the core, it rises due to buoyancy and flows into the breeding zone, where it cools and descends back into the core region, creating a natural circulation loop.

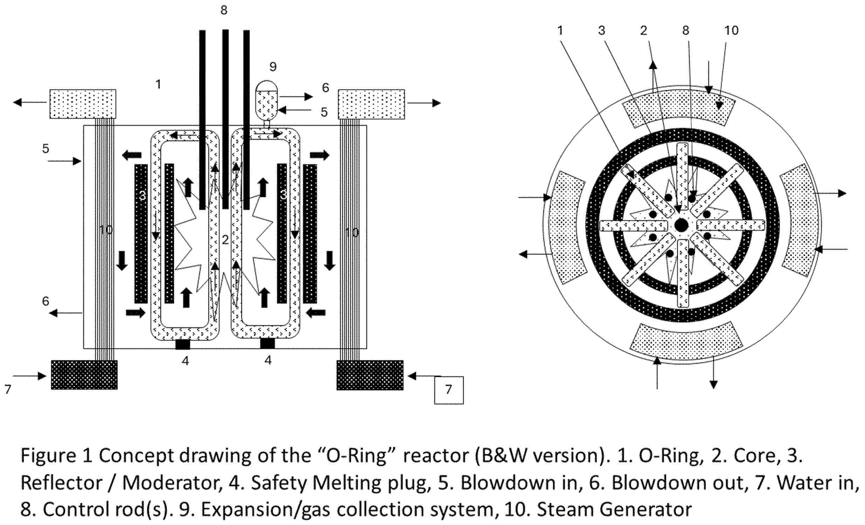

## Claims

1. A nuclear fuel channel comprising:
∘ An annular O-ring configuration enabling natural circulation of molten nuclear fuel through thermal convection,
∘ A variable cross-section along its length to optimize fission reactions in the core zone and neutron capture in the breeding zone.

2. The fuel channel of claim 1, wherein the radial distribution results in a denser arrangement in the core zone and a wider spacing in the breeding zone to optimize neutron economy and criticality management.

3. The fuel channel of claim 1, further comprising a reflector or moderator integrated into the breeding zone, wherein the cross-sectional shape of the channel enhances neutron capture and breeding efficiency.

4. The fuel channel of claim 1, wherein optional upper and lower collectors may be employed to regulate fuel circulation between the core and breeding zones without requiring active pumping.

5. The fuel channel of claim 1, wherein the surrounding coolant is selected from liquid metals or high-temperature gases, ensuring compatibility with fast-spectrum operations.

6. A method for fuel circulation in the channel of claim 1, wherein the molten fuel is heated in the core zone to ascend via thermal expansion and flows into the breeding zone to cool and descend naturally.
